# EUROPÄISCHE PATENTSCHRIFT

(11) **EP 1 431 086 B1**
(45) Veröffentlichungstag und Bekanntmachung des Hinweises auf die Patenterteilung: **31.05.2006**
(21) Anmeldenummer: 02293207.3
(22) Anmeldetag: 20.12.2002
(51) Int. Cl.: B60H 1/22

(54) **Vorrichtung zur Änderung der Temperatur eines Mediums**
Device for changing the temperature of a medium
Dispositif pour changement de température d'un medium

(43) Veröffentlichungstag der Anmeldung: 23.06.2004
(73) Patentinhaber: Behr GmbH & Co. KG, 70469 Stuttgart (DE); Behr France Rouffach SAS, 68250 Rouffach (FR)
(72) Erfinder: Burk, Roland, Dipl.-Ing., 70469 Stuttgart (DE); Otto, Jürgen, Dipl.-Ing. (FH), 75428 Illingen (DE); Mougey, Mathieu, 68190 Ensisheim (FR); Schmadl, Dieter, Dipl.-Ing., 71672 Marbach (DE)
(74) Vertreter: Grauel, Andreas

(56) Entgegenhaltungen:
- EP-A- 0 876 080
- DE-A- 19 804 496
- FR-A- 2 801 468

## Beschreibung

Die Erfindung betrifft eine Vorrichtung zur Änderung der Temperatur eines Mediums, insbesondere zur Verwendung in einem Kratttahrzeug.

Derartige Vorrichtungen zum Austausch von thermischer Energie werden beispielsweise zur Erwärmung von Luft verwendet.

Die Beschreibung der Erfindung und der ihr zugrundeliegenden Probleme erfolgt in der vorliegenden Anmeldung am Beispiel einer elektrischen Vorrichtung zum Beheizen des Innenraums eines Kraftfahrzeugs. Es wird darauf hingewiesen, dass diese beispielhaft ist und die erfindungsgemäße Vorrichtung auch für andere Anwendungszwecke geeignet ist.

Aus dem Stand der Technik sind elektrische Heizvorrichtungen zum Beheizen von Luft für den Einsatz in Kraftfahrzeugen bekannt. Diese Heizvorrichtungen basieren auf PTC-Keramiken, die elektrisch leitend verbunden und mit Wärmeübertragungsflächen versehen sind.

Weiterhin sind Lösungen bekannt, die keine PTC-Keramiken verwenden, sondern andere Heizelemente einsetzen. Es ist beispielsweise ein Vorschlag bekannt, bei dem extrudierte Flachrohre mit Ausnehmungen für Heizdrähte versehen sind, die nach dem Löten stirnseitig in jedes Flachrohr eingelegt und thermisch leitend verklemmt sind.

Aus der EP 0 876 080 Al ist eine elektrische Heizvorrichtung für ein Kraftfahrzeug beschrieben, welche durch diese hindurchströmende Luft erwärmt. Bei dieser Heizvorrichtung dient eine Mehrzahl an PTC-Keramikelementen zur Wärmeerzeugung. Die PTC-Elemente werden an ihrem vorgesehenen Platz gehalten, indem sie zwischen parallel zueinander verlaufenden, wellenförmig ausgebildeten metallischen Wellrippen einklemmt sind. Durch den mechanischen Kontakt ist sowohl ein thermischer, als auch ein elektrischer Übergang zwischen den metallischen Wellrippen und den PTC-Elementen gegeben. Weiterhin wird vorgeschlagen, dass die elektrische Energie den PTC-Elementen mittels der metallischen Wellrippen zugeführt wird.

Es ist Aufgabe der Erfindung eine gegenüber dem Stand der Technik verbesserte Vorrichtung zur Änderung der Temperatur eines Mediums zur Verfügung zu stellen.

Die Aufgabe wird durch eine Vorrichtung gemäss Anspruch 1 gelöst. Bevorzugte Weiterbildungen der Erfindungen sind Gegenstand der Unteransprüche.

Eine erfindungsgemäße Vorrichtung zur Änderung der Temperatur eines Mediums, insbesondere für ein Kraftfahrzeug, weist wenigstens ein erstes Element auf, dass von einem elektrischen Strom durchflossen wird und dessen Temperatur sich in Abhängigkeit des durch das Element fließenden Stromes ändert. Weiterhin ist wenigstens ein zweites und ein drittes Element vorgesehen, das mit dem ersten Element so in Kontakt steht, dass elektrische Ladungsträger zwischen dem ersten und dem zweiten Element transportiert werden.

Dabei ist der Kontakt zwischen dem ersten und wenigstens einem der zweiten oder dritten Elemente derart ausgestaltet, dass eine Übertragung von thermischer Energie begünstigt wird. Weiterhin begünstigt wenigstens eines der Elemente den Austausch von thermischer Energie mit dem Medium.

Das erste Element ist im wesentlichen flächig ausgeführt wobei das zweite und/oder das dritte Element im wesentlichen nicht parallel zur Ausdehnungsrichtung des ersten Elements verläuft.

Gemäß der vorliegenden Erfindung wird unter dem Begriff "flächig" eine solche Ausführung verstanden, bei der die Ausdehnung des Elementes in die eine Raumrichtung im Verhältnis zu der Ausdehnung in die beiden anderen Raumrichtungen klein ist.

Desweiteren werden unter einem flächig ausgeführten ersten Element gemäß der vorliegenden Erfindung auch solche ersten Elemente verstanden, welche aus einer Mehrzahl von ersten Teilelementen, vorzugsweise streifenförmigen ersten Teilelementen zusammengesetzt sind, so daß sich das ergebende erste Element im wesentlichen parallel zu einer Ebene erstreckt.

Weiterhin ist vorgesehen, dass zwischen wenigstens zwei ersten Teilelementen zweite und/oder dritte Elemente derart angeordnet sind, daß sie das erste Element zumindest teilweise durchdringen oder von diesem zumindest teilweise umgeben sind. Ein Kontakt zwischen den ersten Teilelementen ist dabei möglich, jedoch nicht erforderlich.

Das Medium, mit dem thermische Energie ausgetauscht werden soll, umgibt, vorzugsweise umströmt, das erste, zweite und/oder dritte Element.

Bei einer weiteren Ausführungsform der vorliegenden Erfindung weisen die zweiten und/oder dritten Elemente Durchführungen im Kontaktbereich mit den ersten Teilelementen auf, wobei das Material, aus welchem das erste Element zusammengesetzt ist, sich zumindest teilweise durch diese Durchführungen hindurch erstreckt. Ein Kontakt zwischen den ersten Teilelementen beiderseits des zweiten bzw. dritten Elementes ist hierbei möglich, jedoch nicht erforderlich.

In einer besonders bevorzugten Ausführungsform dient die erfindungsgemäße Vorrichtung der Änderung der Temperatur eines gasförmigen Mediums, vorzugsweise Luft oder eines Luftgemischs.

Unter dem Begriff "Heizelement" im Sinne der vorliegenden Erfindung wird ein Element oder eine Gruppe von Elementen verstanden, durch welche elektrische Energie zumindest teilweise in thermische Energie umgewandelt wird. Derartige Heizelemente können beispielsweise Heizelemente aus elektrisch leitfähigem Kunststoff mit positivem Temperaturkoeffizienten (PTC-Heizelemente) sein.

In einer bevorzugten Ausführungsform ist das erste Element wenigstens teilweise aus einem Material aus einer Gruppe von Materialien, insbesondere Kunststoffen zusammengesetzt, welche insbesondere PP (Polypropylen) mit Russ, EVA (Ethyl Vinyl Acetat) mit Russ, PE (Polyethylen), insbesondre HDPE (High Density Polyethylen) oder LDPE (Low Density Polyethylen) oder dergleichen enthält. In einer weiteren bevorzugten Ausführunsform ist das erste Element aus einer Mischung von verschiedenen Polyolefinen zusammengesetzt.

Bevorzugt weist das Material aus welchem das erste Element zusammengesetzt ist elektrisch leitende Partikel, wie beispielsweise Leitruss oder Kleinmetalleinlagen auf. Diese Partikel weisen besonders bevorzugt eine sphärische Geometrie auf, um günstigere PTC Eigenschaften zu erreichen. Der prozentuale Anteil der leitenden Partikel ist dabei vorgegeben.

Der spezifische Widerstand des Materials aus welchem das erste Element zusammengesetzt ist liegt bei 0° C zwischen 1 Ohm*cm und 300 Ohm*cm, bevorzugt zwischen 100 Ohm*cm und 200 Ohm*cm und besonders bevorzugt bei ca. 160 Ohm*cm.

In einer weiteren Ausführungsform der erfindungsgemäßen Vorrichtung besteht das zweite und dritte Element bevorzugt aus einem Material, das aus einer Gruppe von Materialien ausgewählt ist, welche Metalle, insbesondere Aluminium, Zink, Zinn und Übergangsmetalle, insbesondere Eisen, Kupfer, Wolfram und deren Legierungen umfasst.

In einer weiteren Ausführungsform der erfindungsgemäßen Vorrichtung ist das zweite und/oder das dritte Element langgestreckt, insbesondere drahtförmig, ausgeführt.

Im Sinne der vorliegenden Erfindung beschreibt "drahtförmig" die Form eines Körpers, der sich im wesentlichen nur in eine Dimension ausdehnt.

In einer weiteren Ausführungsform der erfindungsgemäßen Vorrichtung ist das zweite und/oder das dritte Element im wesentlichen flächig ausgeführt und weist rippenartige Durchführungen auf.

In einer weiteren Ausführungsform der erfindungsgemäßen Vorrichtung ist das zweite und/oder das dritte Element im wesentlichen flächig ausgeführt.

In einer besonders bevorzugten Ausführungsform der erfindungsgemäßen Vorrichtung verlaufen zweite und/oder dritte Elemente, wenigstens abschnittsweise parallel zueinander.

In einer weiteren Ausführungsform der erfindungsgemäßen Vorrichtung sind mehrere zweite und/oder dritte Elemente in parallelen Ebenen angeordnet.

In einer weiteren Ausführungsform der erfindungsgemäßen Vorrichtung sind das zweite und das dritte Element mit den Polen einer Stromquelle verbunden. Hierdurch werden Ladungsträger zwischen den Polen, über das zweite, das erste und das dritte Element, transportiert.

In einer weiteren Ausführungsform der erfindungsgemäßen Vorrichtung weisen wenigstens zwei, bevorzugt mehrere, erste Elemente einen Abstand zueinander auf, der die Übertragung von thermischer Energie zwischen dem zweiten und/oder dritten Element und dem umgebenden bzw. umströmenden Medium begünstigt.

In einer weiteren Ausführungsform der erfindungsgemäßen Vorrichtung wird der Abstand zwischen den ersten Elementen so gewählt, dass der Temperaturgradient entlang des zweiten und/oder dritten Elements klein ist.

In einer weiteren Ausführungsform der erfindungsgemäßen Vorrichtung ist das zweite und/oder dritte Element so ausgeführt, dass dessen Verhältnis von Oberfläche zu Volumen größer als das einer Kugel ist.

Hierdurch wird erreicht, dass die Austauschfläche möglichst groß ist und dadurch der Austausch von thermischer Energie zwischen dem zweiten und/oder dritten Element und dem Medium begünstigt wird. Die Austauschfläche ist der Teil der Oberfläche, der mit dem Medium und dem ersten Element so in Kontakt steht, dass thermische Energie übertragen wird.

In einer weiteren Ausführungsform der erfindungsgemäßen Vorrichtung ist der spezifische elektrische Widerstand des zweiten und dritten Elements kleiner als der spezifische elektrische Widerstand des ersten Elements.

Der spezifische elektrische Widerstand des zweiten und des dritten Elements ist gegenüber dem spezifischen elektrischen Widerstand des ersten Elements vorzugsweise so klein, dass die Eigenerwärmung des zweiten und dritten Elements ein vorbestimmtes Maß, das vorzugsweise zwischen 0 K und 100 K, zwischen 0 K und 50 K, zwischen 0 K und 30 K, besonders bevorzugt zwischen 0 K und 10 K oder zwischen 0 K und 5 K liegt, nicht überschreitet.

In einer weiteren Ausführungsform der erfindungsgemäßen Vorrichtung sind mehrere zweite bzw. dritte Elemente elektrisch leitend, insbesondere durch eine oder mehrere Verbindungseinrichtungen, miteinander verbunden.

In einer weiteren Ausführungsform der erfindungsgemäßen Vorrichtung sind die Ebenen jeweils alternierend mit den Polen wenigstens einer Stromquelle direkt oder indirekt verbunden. Im Sinne der vorliegenden Erfindung bedeutet "alternierend", dass sich Pole mit unterschiedlichem elektrischem Potential abwechseln.

Eine indirekte Verbindung mit den Polen einer Stromquelle gemäss der vorliegenden Erfindung bedeutet, dass zwischen dem zweiten und/oder dritten Element und der Stromquelle weitere elektrische oder elektronische Einrichtungen und insbesondere Schalteinrichtungen angeordnet sind.

In einer weiteren Ausführungsform der erfindungsgemäßen Vorrichtung sind die Verbindungseinrichtungen an mehreren, bevorzugt gegenüberliegenden, Seitenflächen der Vorrichtung angeordnet.

In einer weiteren Ausführungsform der erfindungsgemäßen Vorrichtung können die zweiten und dritten Elemente, bevorzugt mehrere zweite und dritte Elemente und besonders bevorzugt die Ebenen, einzeln bestromt werden.

Hierdurch können einzelne Ebenen zu- bzw. abgeschaltet werden und die Heizleistung in Abhängigkeit der bestromten Elemente stufenweise verändert werden.

Eine besonders bevorzugte Ausführungsform der erfindungsgemäßen Vorrichtung ist mit einem Rahmen, vorzugsweise einem Rahmen aus nichtleitendem und/oder temperaturbeständigem Material versehen, durch den diese gehalten wird.

In einer weiteren Ausführungsform ist die erfindungsgemäße Vorrichtung in einer Einrichtung zu Änderung der Innenraumtemperatur eines Kraftfahrzeuges angeordnet oder in dieser aufgenommen.

Die erfindungsgemäße Vorrichtung findet insbesondere Verwendung als Zuheizer in Kraftfahrzeugklimaanlagen.

Im folgenden werden weitere Merkmale und Anwendungsmöglichkeiten der vorliegenden Erfindung anhand von verschiedenen Ausführungsbeispielen erläutert. Diese sind jedoch nur beispielhaft aufgezeigt und sollen nicht als Einschränkung der Erfindung verstanden werden.

Fig. 1 zeigt ein erstes Ausführungsbeispiel einer Vorrichtung zum Erwärmen von Luft
Fig. 2 zeigt eine Vorrichtung gem. Fig. 1 in einer Schnittdarstellung entlang der Linie B-B
Fig. 3 zeigt ein zweites Ausführungsbeispiel einer Vorrichtung zum Erwärmen von Luft
Fig. 4 zeigt eine Vorrichtung gem. Fig. 3 in einer Schnittdarstellung entlang der Linie A-A
Fig. 5 zeigt ein drittes Ausführungsbeispiel einer Vorrichtung zum Erwärmen von Luft
Fig. 6 zeigt eine Schnittdarstellung der Vorrichtung gem. Fig. 5 entlang der Linie C-C

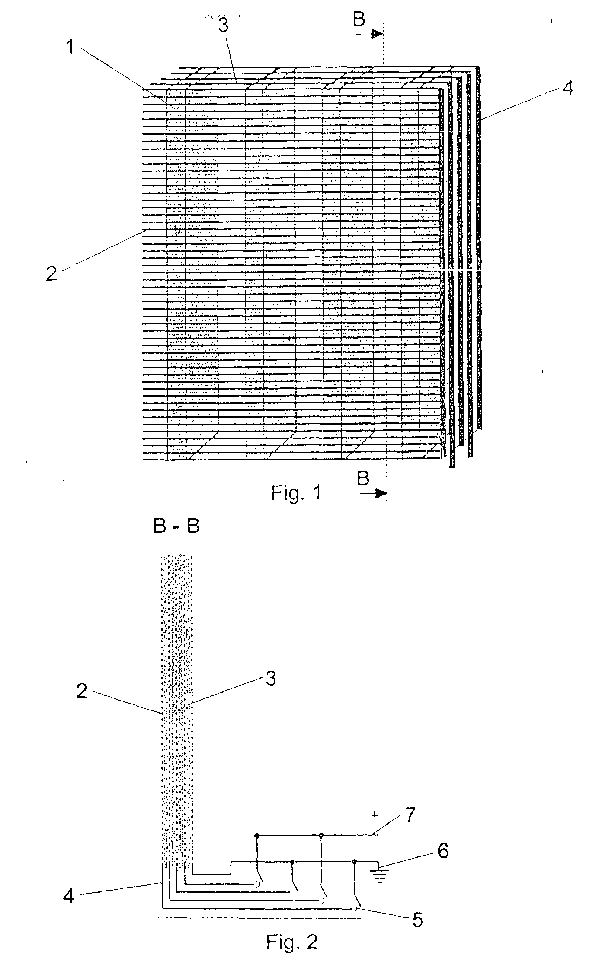

**Fig. 1** zeigt eine schematische Darstellung eines Ausführungsbeispiels einer Vorrichtung zur Erwärmung von Luft. Die Vorrichtung besteht aus mehreren parallelen, in Ebenen angeordneten, drahtförmigen zweiten **(2)** bzw. dritten Elementen **(3).** Die Ebenen werden durch wenigstens zwei zweite **(2)** bzw. dritte Elemente **(3)** aufgespannt.

Die ersten Elemente **(1)** sind in vorgegebenen Abständen mit den zweiten **(2)** und dritten Elementen **(3)** elektrisch- und wärmeleitend verbunden. Die drahtförmigen zweiten **(2)** und dritten Elemente **(3)** erstrecken sich durch zumindest ein erstes Element **(1)** hindurch und erstrecken sich zumindest teilweise orthogonal zu diesem.

Die zweiten **(2)** bzw. dritten Elemente **(3)** sind jeweils in mehreren parallelen Ebenen angeordnet und durch Verbindungseinrichtungen **(4)** elektrisch leitend an einer Seite der Vorrichtung miteinander verbunden. Die Verbindungseinrichtungen **(4)** sind vorzugsweise draht- oder schienenartig ausgeführt.

**Fig. 2** zeigt eine Vorrichtung gem. **Fig. 1** in einer Schnittdarstellung entlang der Linie B-B. Die drahtförmigen zweiten **(2)** und dritten Elemente **(3)** zweier nebeneinander liegender Ebenen sind so angeordnet, dass sie zueinander versetzt sind. Mindestens ein zweites Element **(2)** einer ersten Ebene liegt hierbei im wesentlichen zwischen zwei dritten Elementen **(3)** der parallel verlaufenden, benachbarten Ebene. Die Abstände zwischen zwei nebeneinander liegenden Ebenen, der spezifische Widerstand des ersten Elementes und die Geometrie und Zahl der parallel geschalteten ersten Elemente sind so gewählt, dass eine vorgegebene Heizleistung durch die Vorrichtung abgegeben wird.

Die Ebenen sind direkt oder indirekt mit den Polen **(6, 7)** der Stromquelle elektrisch leitend verbunden. Die Heizleistung der Vorrichtung kann so durch Zu- und Abschaltung, mittels des Schalters **(5),** der einzelnen Ebenen diskret oder durch beispielsweise die Vorschaltung von Steuer- bzw. Regelelementen kontinuierlich geregelt werden. Die Vorrichtung kann beispielsweise mit einem nichtleitenden Kunststoffrahmen versehen sein, der die Steuer- und/oder Regelungseinrichtung aufnimmt.

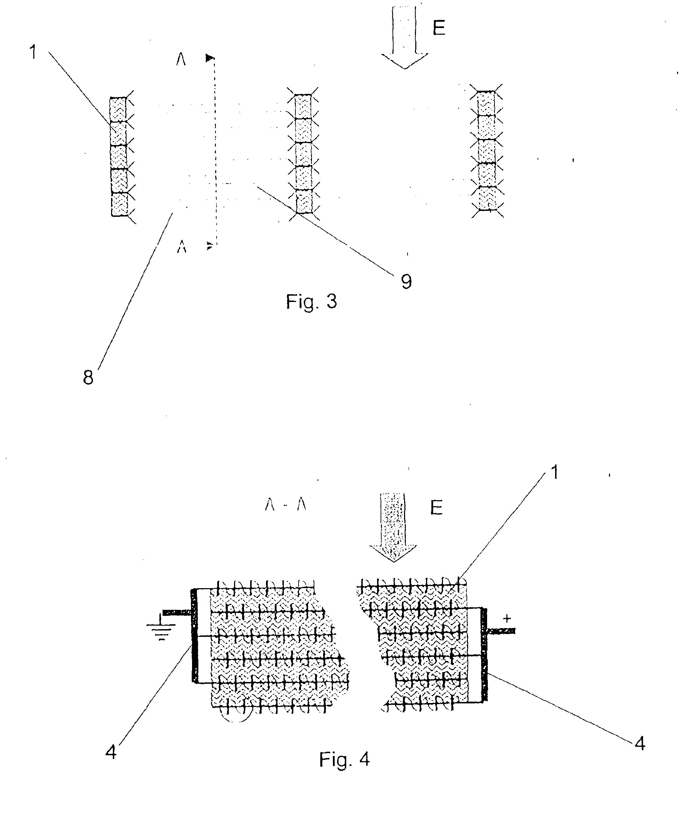

**Fig. 3** zeigt ein zweites Ausführungsbeispiel einer Vorrichtung zum Erwärmen von Luft. Die zweiten **(8)** und dritten Elemente **(9)** sind rippenartig ausgeführt. Durch die rippenartige Ausführung wird eine vergrößerte Oberfläche erzielt. Dadurch ist auch die Austauschfläche größer, über die thermische Energie mit dem Medium, das in Pfeilrichtung E durch die Vorrichtung strömt, übertragen wird. Der Austausch von thermischer Energie zwischen der Vorrichtung und dem Element wird dadurch begünstigt.

**Fig. 4** zeigt eine Vorrichtung gem. **Fig. 3** in einer Schnittdarstellung entlang der Linie A-A. Die rippenartigen zweiten **(8)** und dritten Elemente **(9)** sind beispielsweise in dem Abschnitt zwischen zwei ersten Elementen **(1)** um einen vorgegebenen Winkel, beispielsweise 30°, 45°, 60° oder 90° gegenüber dem Abschnitt, in dem sie innerhalb des ersten Elements **(1)** verlaufen, verdreht.

Die Verbindungseinrichtungen **(4)** sind an gegenüberliegenden Seitenflächen der Vorrichtung angebracht. Hierdurch ist beispielsweise die Spannung, die an den ersten Elementen **(1)** anliegt, an allen ersten Elementen **(1)** gleich.

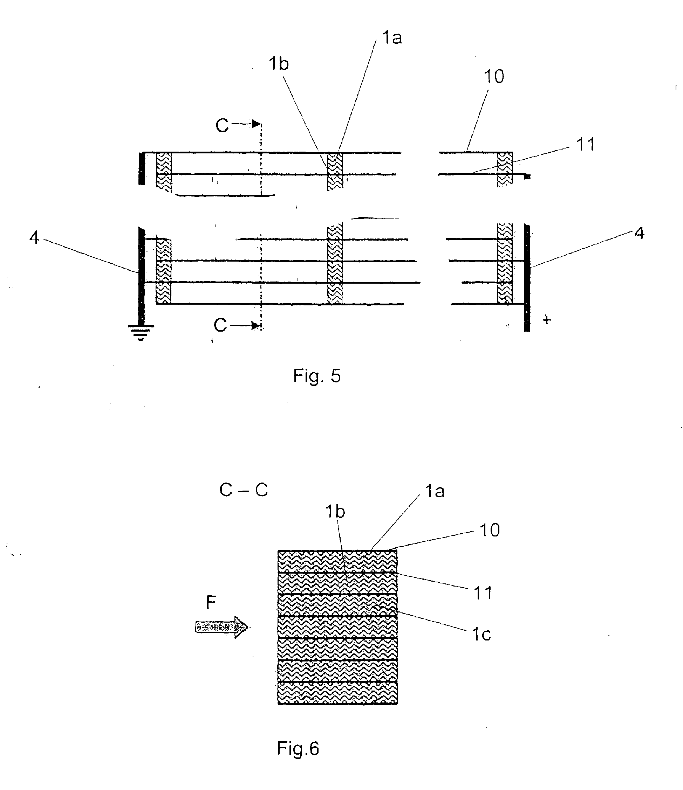

**Fig. 5** zeigt ein weiteres Ausführungsbeispiel einer Vorrichtung zum Erwärmen von Luft beim dem die ersten Elemente aus einer Mehrzahl von ersten Teilelementen **(1a, 1b, 1c)** zusammengesetzt sind. Zwischen den ersten Teilelementen wird das erste Element von den zweiten Elementen **(10)** und dritten Elementen **(11)** derart durchdrungen, daß die ersten Teilelemente nicht oder nur im Randbereich der zweiten und dritten Elemente in Kontakt stehen.

Die zweiten **(10)** und dritten Elemente **(11)** sind flächig ausgestaltet. Die zweiten **(10)** und dritten Elemente **(11)** können einfache Bleche sein, können jedoch auch mit Strukturen beispielsweise zur besseren Übertragung von thermischer Energie ausgeführt sein.

**Fig. 6** zeigt eine Schnittdarstellung der Vorrichtung gem.
**Fig. 5** entlang der Linie C-C. Die Vorrichtung wird von dem Medium in Pfeilrichtung F durchströmt. Die Verbindungseinrichtungen **(4)** sind vorzugsweise an gegenüberliegenden Seitenflächen der Vorrichtung , angebracht.

## Patentansprüche

1. Vorrichtung zur Änderung der Temperatur eines Mediums, insbesondere für ein Kraftfahrzeug mit
mindestens einem ersten Element **(1),** welches von einem elektrischen Strom durchflossen wird und dessen Temperatur sich in Abhängigkeit des durch das Element **(1)** fließenden Stromes ändert, und
wenigstens einem zweiten **(2, 8, 10)** und dritten Element **(3, 9, 11),** die so mit dem ersten Element **(1)** in Kontakt stehen, dass elektrische Ladungsträger zwischen den Elementen transportiert werden, wobei
das erste Element **(1)** derart mit wenigstens dem zweiten **(2, 8, 10)** oder dritten Element **(3, 9, 11)** in Kontakt steht, dass eine Übertragung von thermischer Energie begünstigt wird,
wenigstens eines der Elemente den Austausch von thermischer Energie mit dem Medium begünstigt, das erste Element **(1)** flächig ausgeführt ist und das zweite **(2, 8, 10)** und/oder dritte Element **(3, 9, 11)** im wesentlichen nicht parallel zur Ausdehnungsrichtung der Fläche verläuft,
**dadurch gekennzeichnet, dass**
wenigstens ein zweites Element **(2, 8, 10)** und/oder drittes Element **(3, 9, 11)** das erste Element **(1)** zumindest teilweise durchdringt oder von diesem zumindest teilweise umgeben ist.

2. Vorrichtung zur Änderung der Temperatur eines Mediums nach Anspruch 1,
**dadurch gekennzeichnet, dass**
das erste Element **(1)** ein Heizelement ist, das bevorzugt aus einem Material mit positivem Temperaturkoeffizienten (PTC-Element) besteht, wobei dieses besonders bevorzugt ein elektrisch leitfähiger Kunststoff ist.

3. Vorrichtung zur Änderung der Temperatur eines Mediums nach wenigstens einem der vorhergehenden Ansprüche,
**dadurch gekennzeichnet, dass**
das erste Element (1) wenigstens ein Material enthält, das aus einer Gruppe ausgewählt ist, die Russ, thermoplastische und duroplastische Kunststoffe, insbesondere PP (Polypropylen) mit Russ, PE (polyethylen), Polyolefine und deren Familie, EVA (Ethyl-Vinyl-Acetat) mit Russ, PS (Polystyrol) mit Russ, PU (Polyurethan) oder dergleichen, oder beliebige Mischungen oder Verbindungen aus diesen Materialien enthält.

4. Vorrichtung zur Änderung der Temperatur eines Mediums nach wenigstens einem der vorhergehenden Ansprüche,
**dadurch gekennzeichnet, dass**
das erste Element aus eine Mehrzahl von ersten Teilelementen **(1a, 1b, 1c),** vorzugsweise streifenförmigen ersten Teilelementen, zusammengesetzt ist, so daß sich das zusammengesetzte erste Element im wesentlichen parallel zu einer Ebene erstreckt.

5. Vorrichtung zur Änderung der Temperatur eines Mediums nach wenigstens einem der vorhergehenden Ansprüche,
**dadurch gekennzeichnet, dass**
die Teilelemente **(1a, 1b, 1c)** des ersten Elementes miteinander in Kontakt stehen.

6. Vorrichtung zur Änderung der Temperatur eines Mediums nach wenigstens einem der vorhergehenden Ansprüche,
**dadurch gekennzeichnet, dass**
die zweiten Elemente **(2, 8, 10)** und/oder dritten Elemente **(3, 9, 11)** im Kontaktbereich mit dem ersten Element Durchführungen aufweisen, durch die hindurch sich das Material aus dem die Teilelemente des ersten Elementes bestehen zumindest teilweise erstreckt.

7. Vorrichtung zur Änderung der Temperatur eines Mediums, nach wenigstens einem der vorhergehenden Ansprüche,
**dadurch gekennzeichnet, dass**
das zweite **(2, 8, 10)** und dritte Element **(3, 9, 11)** bevorzugt aus einem Material besteht, welches aus einer Gruppe von Materialien ausgewählt ist, welche Metalle, insbesondere Aluminium, Zink, Zinn und Übergangsmetalle, insbesondere Eisen, Kupfer, Wolfram und deren Legierungen umfasst.

8. Vorrichtung zur Änderung der Temperatur eines Mediums, nach wenigstens einem der vorhergehenden Ansprüche,
**dadurch gekennzeichnet, dass**
das zweite **(2)** und/oder das dritte Element **(3)** langgestreckt, insbesondere drahtförmig, ausgestaltet ist.

9. Vorrichtung zur Änderung der Temperatur eines Mediums, nach wenigstens einem der vorhergehenden Ansprüche,
**dadurch gekennzeichnet, dass**
das zweite **(8)** und/oder das dritte Element **(9)** rippenartig ausgestaltet ist.

10. Vorrichtung zur Änderung der Temperatur eines Mediums, nach wenigstens einem der vorhergehenden Ansprüche,
**dadurch gekennzeichnet, dass**
das zweite **(10)** und/oder dritte Element **(11)** flächig ausgestaltet ist.

11. Vorrichtung zur Änderung der Temperatur eines Mediums, nach wenigstens einem der vorhergehenden Ansprüche,
**dadurch gekennzeichnet, dass**
mehrere zweite **(2, 8, 10)** und/oder dritte Elemente **(3, 9, 11)** wenigstens abschnittsweise parallel zueinander verlaufen.

12. Vorrichtung zur Änderung der Temperatur eines Mediums, nach wenigstens einem der vorhergehenden Ansprüche,
**dadurch gekennzeichnet, dass**
mehrere zweite **(2, 8, 10)** und/oder dritte Elemente **(3, 9, 11)** in parallelen Ebenen angeordnet sind.

13. Vorrichtung zur Änderung der Temperatur eines Mediums, nach wenigstens einem der vorhergehenden Ansprüche,
**dadurch gekennzeichnet, dass**
das wenigstens ein zweites **(2, 8, 10)** und wenigstens ein drittes Element **(3, 9, 11),** bevorzugt mehrere zweite **(2, 8, 10)** und dritte Elemente **(3, 9, 11)** und besonders bevorzugt alle zweiten **(2, 8, 10)** und dritten Elemente **(3, 9, 11)** direkt oder indirekt mit den Polen **(6,7)** einer Stromquelle verbunden sind.

14. Vorrichtung zur Änderung der Temperatur eines Mediums, nach wenigstens einem der vorhergehenden Ansprüche,
**dadurch gekennzeichnet, dass** die Vorrichtung derart ausgebildet ist, dass
das Medium die ersten **(1),** zweiten **(2, 8, 10)** und/oder dritten Elemente **(3, 9, 11)** umgibt, vorzugsweise zu umströmen vermag.

15. Vorrichtung zur Änderung der Temperatur eines Mediums, nach wenigstens einem der vorhergehenden Ansprüche,
**dadurch gekennzeichnet, dass**
das zweite **(2, 8, 10)** und/oder dritte **(3, 9, 11)** Elemente so ausgeführt ist, dass dessen Verhältnis von Oberfläche zu Volumen größer als das einer Kugel ist.

16. Vorrichtung zur Änderung der Temperatur eines Mediums, nach wenigstens einem der vorhergehenden Ansprüche,
**dadurch gekennzeichnet, dass**
der spezifische elektrische Widerstand des zweiten **(2, 8, 10)** und dritten Elements **(3, 9, 11)** kleiner als der spezifische elektrischen Widerstand des ersten Elements **(1)** ist.

17. Vorrichtung zur Änderung der Temperatur eines Mediums, nach wenigstens einem der vorhergehenden Ansprüche,
**dadurch gekennzeichnet, dass**
mehrere zweite **(2, 8, 10)** bzw. dritte Elemente **(3, 9, 11)** elektrisch leitend, insbesondere durch Verbindungseinrichtungen **(4),** miteinander verbunden sind.

18. Vorrichtung zur Änderung der Temperatur eines Mediums, nach wenigstens einem der Ansprüche 12 bis 17,
**dadurch gekennzeichnet, dass**
die Ebenen jeweils alternierend mit den Polen **(6, 7)** wenigstens einer Stromquelle direkt oder indirekt verbunden sind.

19. Vorrichtung zur Änderung der Temperatur eines Mediums, nach wenigstens einem der vorhergehenden Ansprüche,
**dadurch gekennzeichnet, dass**
die Verbindungseinrichtungen **(4)** an mehreren, vorzugsweise sich gegenüberliegenden, Seitenflächen angeordnet sind.

20. Vorrichtung zur Änderung der Temperatur eines Mediums, nach wenigstens einem der vorhergehenden Ansprüche,
**dadurch gekennzeichnet, dass**
das zweite **(2, 8, 10)** und dritte Elemente **(3, 9, 11),** bevorzugt mehrere zweite **(2, 8, 10)** und dritte Elemente **(3, 9, 11)** und besonders bevorzugt die Ebenen, einzeln bestromt werden können.

21. Einrichtung zur Änderung der Temperatur eines Mediums, insbesondere für ein Kraftfahrzeug, mit Luftströmungswegen, Luftströmungssteuerelementen und wenigstens einer Luftfördereinrichtung und einem Gehäuse, innerhalb dessen eine Vorrichtung zur Änderung der Temperatur eines Mediums, gemäss wenigstens einem der vorstehenden Ansprüche, angeordnet ist.

22. Verwendung einer Vorrichtung zur Änderung der Temperatur eines Mediums nach wenigstens einem der Ansprüche 1 bis 20, wobei
das Medium ein gasförmiges Medium, vorzugsweise Luft oder ein Luftgemisch, ist.

## Claims

1. Device for changing the temperature of a medium, in particular for a motor vehicle, with
at least one first element **(1)** through which an electric current passes and whose temperature changes as a function of the current flowing through the said element **(1), and**
at least one second element **(2, 8, 10)** and third element **(3, 9, 11),** which are in contact with the first element **(1)** in such manner that electric charge carriers are transported between the elements, such that
the first element **(1)** is in contact with at least the second element **(2, 8, 10)** or the third element **(3, 9, 11)** so that a transfer of thermal energy is favoured,
at least on of the elements favours exchange of thermal energy with the medium, the first element **(1)** is planar and the second element **(2, 8, 10)** and/or the third element **(3,9,11)** extends essentially not parallel to the extension direction of the plane,
**characterised in that**
at least one second element **(2, 8, 10)** and/or third element **(3, 9, 11)** penetrates the first element **(1)** at least partially or is at least partially surrounded by it.

2. Device for changing the temperature of a medium according to Claim 1,
**characterised in that**
the first element **(1)** is a heating element, preferably consisting of a material with a positive temperature coefficient (PTC element), this preferably being an electrically conducting plastic.

3. Device for changing the temperature of a medium according to at least one of the preceding claims,
**characterised in that**
the first element **(1)** contains at least one material chosen from a group comprising carbon black, thermoplastics and thermosetting plastics, in particular PP (polypropylene) with carbon black, PE (polyethylene), polyolefins and their family, EVA (ethyl vinyl acetate) with carbon black, PS (polystyrene) with carbon black, PU (polyurethane) or suchlike, or any mixtures or compounds of those materials.

4. Device for changing the temperature of a medium according to at least one of the preceding claims,
**characterised in that**
the first element is composed of a plurality of part-elements (**1a, 1b, 1c),** preferably strip-shaped first part-elements, such that the composite first element extends essentially parallel to a plane.

5. Device for changing the temperature of a medium according to at least one of the
preceding claims,
**characterised in that**
the part-elements **(1a, 1b, 1c)** of the first element are in contact with one another.

6. Device for changing the temperature of a medium according to at least one of the preceding claims,
**characterised in that**
in the contact area with the first element, the second element **(2, 8, 10)** and/or third element **(3, 9, 11)** have apertures through which the material from which the part-elements of the first element are made extends, at least in part.

7. Device for changing the temperature of a medium according to at least one of the preceding claims,
**characterised in that**
the second element **(2, 8, 10)** and third element **(3, 9, 11)** preferably consist of a material chosen from a group of materials comprising metals, in particular aluminium, zinc, tin and transition metals, in particular iron, copper, tungsten and alloys thereof

8. Device for changing the temperature of a medium according to at least one of the
preceding claims,
**characterised in that**
the second element **(2)** and/or third element **(3)** is elongated, in particular in the form of a wire.

9. Device for changing the temperature of a medium according to at least one of the preceding claims,
**characterised in that**
the second element **(2)** and/or third element **(3)** is finned.

10. Device for changing the temperature of a medium according to at least one of the preceding claims,
**characterised in that**
the second element **(2)** and/or third element **(3)** is planar.

11. Device for changing the temperature of a medium according to at least one of the preceding claims,
**characterised in that**
several second elements **(2, 8, 10)** and/or third elements **(3, 9, 11)** extend parallel to one another, at least in sections.

12. Device for changing the temperature of a medium according to at least one of the preceding claims,
**characterised in that**
several second elements **(2, 8, 10)** and/or third elements **(3, 9, 11)** are arranged in parallel planes.

13. Device for changing the temperature of a medium according to at least one of the preceding claims,
**characterised in that**
at least one second element **(2, 8, 10)** and at least one third element **(3, 9, 11),** preferably several second elements **(2, 8, 10)** and third element **(3, 9, 11)** and more preferably still all the second elements **(2, 8, 10)** and third element **(3, 9, 11)** are connected directly or indirectly to the poles **(6, 7)** of a current source.

14. Device for changing the temperature of a medium according to at least one of the preceding claims,
**characterised in that**
the medium surround and can preferably flow around the first element (1), the second elements (**2, 8,10)** and/or the third elements **(3, 9, 11).**

15. Device for changing the temperature of a medium according to at least one of the preceding claims,
**characterised in that**
the second elements (**2, 8, 10)** and/or the third elements **(3, 9, 11)** are made such that their surface area to volume ratio is larger than that of a sphere.

16. Device for changing the temperature of a medium according to at least one of the preceding claims,
**characterised in that**
The specific electrical resistance of the second elements **(2, 8, 10)** and the third elements **(3, 9, 11)** is lower than the specific electrical resistance of the first element **(1).**

17. Device for changing the temperature of a medium according to at least one of the preceding claims,
**characterised in that**
several second elements **(2, 8, 10)** and third elements **(3, 9, 11)** are connected to one another in an electrically conducting way, in particular by means of connection devices **(4).**

18. Device for changing the temperature of a medium according to at least one of the preceding claims,
**characterised in that**
the planes are directly or indirectly connected, respectively in alternation, to the poles **(6, 7)** of at least one current source.

19. Device for changing the temperature of a medium according to at least one of the preceding claims,
**characterised in that**
the connection devices **(4)** are arranged on several, preferably opposite lateral surfaces.

20. Device for changing the temperature of a medium according to at least one of the preceding claims,
**characterised in that**
current can be passed individually though the second elements **(2, 8, 10)** and third elements **(3, 9, 11),** preferably though several second elements **(2, 8, 10)** and third elements (**3, 9, 11**) and more preferably still the planes.

21. Equipment for changing the temperature of a medium, in particular for a motor vehicle, with airflow paths, airflow control elements and at least one air delivery device and a housing, within which is arranged a device for changing the temperature of a medium according to at least one of the preceding claims.

22. Use of a Device for changing the temperature of a medium according to at least one of Claims 1 to 20, such that
the medium is a gaseous medium, preferably air or an air mixture.

## Revendications

1. Dispositif permettant de changer la température d'un milieu, en particulier pour un véhicule automobile, comprenant :
- au moins un premier élément (1) qui est traversé par un courant électrique et dont la température se modifie en fonction du courant traversant l'élément (1), et
- au moins un deuxième élément (2, 8, 10) et un troisième élément (3, 9, 11) qui sont en contact avec le premier élément (1), de manière telle que des porteurs de charges électriques soient transportés entre les éléments,
où le premier élément (1) est en contact avec au moins le deuxième élément (2, 8, 10) ou avec le troisième élément (3, 9, 11), de manière telle qu'un transfert d'énergie thermique soit favorisé,
au moins l'un des éléments favorise l'échange d'énergie thermique avec le milieu, le premier élément (1) est réalisé de manière plane et le deuxième élément (2, 8, 10) et/ou le troisième élément (3, 9, 11) s'étend pratiquement de façon non parallèle à la direction d'étendue de la surface,
**caractérisé**
**en ce qu'**au moins un deuxième élément (2, 8, 10) et/ou un troisième élément (3, 9, 11) traverse au moins partiellement le premier élément (1) ou est entouré au moins partiellement par celui-ci.

2. Dispositif permettant de changer la température d'un milieu selon la revendication 1, **caractérisé en ce que** le premier élément (1) est un élément chauffant qui se compose, de préférence, d'un matériau à coefficient de température positif (élément CTP), où ce matériau est, de façon particulièrement préférable, une matière plastique électriquement conductrice.

3. Dispositif permettant de changer la température d'un milieu selon au moins l'une ou l'autre des revendications précédentes, **caractérisé en ce que** le premier élément (1) contient au moins une matière qui est choisie parmi un groupe qui contient du noir de carbone, des matières thermoplastiques et thermodurcissables, en particulier du polypropylène (PP) avec du noir de carbone, du polyéthylène (PE), des polyoléfines et leur famille, de l'acétate d'éthyle et de vinyle (EVA) avec du noir de carbone, du polystyrène (PS) avec du noir de carbone, du polyuréthane (PU) ou des matières analogues, ou bien des mélanges quelconques ou des combinaisons de ces matières.

4. Dispositif permettant de changer la température d'un milieu selon au moins l'une quelconque des revendications précédentes, **caractérisé en ce que** le premier élément est composé d'une pluralité de premiers éléments partiels (1a, 1b, 1c), de préférence de premiers éléments partiels en forme de bandes, de sorte que le premier élément composé s'étend pratiquement de façon parallèle à un plan.

5. Dispositif permettant de changer la température d'un milieu selon au moins l'une quelconque des revendications précédentes, **caractérisé en ce que** les éléments partiels (1a, 1b, 1c) du premier élément sont en contact les uns avec les autres.

6. Dispositif permettant de changer la température d'un milieu selon au moins l'une quelconque des revendications précédentes, **caractérisé en ce que** les deuxièmes éléments (2, 8, 10) et/ou les troisièmes éléments (3, 9, 11) présentent, dans la zone de contact avec le premier élément, des passages à travers lesquels s'étend au moins partiellement la matière dont se composent les éléments partiels du premier élément.

7. Dispositif permettant de changer la température d'un milieu selon au moins l'une quelconque des revendications précédentes, **caractérisé en ce que** le deuxième élément (2, 8, 10) et le troisième élément (3, 9, 11) se composent, de préférence, d'un matériau qui est choisi parmi un groupe de matériaux qui comprend des métaux, en particulier de l'aluminium, du zinc, de l'étain et des métaux de transition, en particulier du fer, du cuivre, du tungstène et leurs alliages.

8. Dispositif permettant de changer la température d'un milieu selon au moins l'une quelconque des revendications précédentes, **caractérisé en ce que** le deuxième élément (2) et/ou le troisième élément (3) est configuré en étant étiré en longueur, en particulier sous forme de fil métallique.

9. Dispositif permettant de changer la température d'un milieu selon au moins l'une quelconque des revendications précédentes, **caractérisé en ce que** le deuxième élément (8) et/ou le troisième élément (9) est configuré en forme d'ailette.

10. Dispositif permettant de changer la température d'un milieu selon au moins l'une quelconque des revendications précédentes, **caractérisé en ce que** le deuxième élément (10) et/ou le troisième élément (11) est configuré de manière plane.

11. Dispositif permettant de changer la température d'un milieu selon au moins l'une quelconque des revendications précédentes, **caractérisé en ce que** plusieurs deuxièmes éléments (2, 8, 10) et/ou plusieurs troisièmes éléments (3, 9, 11) s'étendent au moins partiellement de façon parallèle les uns par rapport aux autres.

12. Dispositif permettant de changer la température d'un milieu selon au moins l'une quelconque des revendications précédentes, **caractérisé en ce que** plusieurs deuxièmes éléments (2, 8, 10) et/ou plusieurs troisièmes éléments (3, 9, 11) sont disposés dans des plans parallèles.

13. Dispositif permettant de changer la température d'un milieu selon au moins l'une quelconque des revendications précédentes, **caractérisé en ce qu'**au moins un deuxième élément (2, 8, 10) et au moins un troisième élément (3, 9, 11), de préférence plusieurs deuxièmes éléments (2, 8, 10) et plusieurs troisièmes éléments (3, 9, 11) et, de façon particulièrement préférable, tous les deuxièmes éléments (2, 8, 10) et tous les troisièmes éléments (3, 9, 11) sont connectés directement ou indirectement aux pôles (6, 7) d'une source de courant.

14. Dispositif permettant de changer la température d'un milieu selon au moins l'une quelconque des revendications précédentes, **caractérisé en ce que** le dispositif est conçu de manière telle, que le milieu entoure le premier élément (1), les deuxièmes éléments (2, 8, 10) et/ou les troisièmes éléments (3, 9, 11), de préférence puisse s'écouler autour d'eux.

15. Dispositif permettant de changer la température d'un milieu selon au moins l'une quelconque des revendications précédentes, **caractérisé en ce que** le deuxième élément (2, 8, 10) et/ou le troisième élément (3, 9, 11) est réalisé de manière telle, que son rapport de surface sur volume soit supérieur à celui d'une bille.

16. Dispositif permettant de changer la température d'un milieu selon au moins l'une quelconque des revendications précédentes, **caractérisé en ce que** la résistance électrique spécifique du deuxième élément (2, 8, 10) et du troisième élément (3, 9, 11) est inférieure à la résistance électrique spécifique du premier élément (1).

17. Dispositif permettant de changer la température d'un milieu selon au moins l'une quelconque des revendications précédentes, **caractérisé en ce que** plusieurs deuxièmes éléments (2, 8, 10) ou plusieurs troisièmes éléments (3, 9, 11) sont connectés les uns aux autres de façon électriquement conductrice, en particulier par des dispositifs de connexion (4).

18. Dispositif permettant de changer la température d'un milieu selon au moins l'une quelconque des revendications 12 à 17, **caractérisé en ce que** les plans alternant respectivement avec les pôles (6, 7) sont connectés directement ou indirectement au moins à une source de courant.

19. Dispositif permettant de changer la température d'un milieu selon au moins l'une quelconque des revendications précédentes, **caractérisé en ce que** les dispositifs de connexion (4) sont disposés sur plusieurs surfaces latérales, de préférence se faisant face.

20. Dispositif permettant de changer la température d'un milieu selon au moins l'une quelconque des revendications précédentes, **caractérisé en ce que** le deuxième élément (2, 8, 10) et le troisième élément (3, 9, 11), de préférence plusieurs deuxièmes éléments (2, 8, 10) et plusieurs troisièmes éléments (3, 9, 11) et, de façon particulièrement préférable, les plans, peuvent être alimentés en courant individuellement.

21. Equipement permettant de changer la température d'un milieu, en particulier pour un véhicule automobile, comprenant des trajectoires de circulation d'air, des éléments de commande de circulation d'air et au moins un équipement d'alimentation d'air et un carter à l'intérieur duquel est disposé un dispositif permettant de changer la température d'un milieu, conformément au moins à l'une quelconque des revendications précédentes.

22. Utilisation d'un dispositif permettant de changer la température d'un milieu selon au moins l'une quelconque des revendications 1 à 20, où le milieu est un milieu gazeux, de préférence de l'air ou bien un mélange d'air.
